**Europäisches Patentamt**

**European Patent Office**

**Office européen des brevets**

(19)

(11) Veröffentlichungsnummer: **0 172 401 B1**

(12) **EUROPÄISCHE PATENTSCHRIFT**

(45) Veröffentlichungstag der Patentschrift:
**08.02.89**

(21) Anmeldenummer: **85108815.3**

(22) Anmeldetag: **15.07.85**

(51) Int. Cl.⁴: **F 01 N 7/10, F 16 L 39/04**

(54) Verbindung für mehrflutige Leitungen.

(30) Priorität: **27.07.84 DE 3427746**

(43) Veröffentlichungstag der Anmeldung:
**26.02.86 Patentblatt 86/9**

(45) Bekanntmachung des Hinweises auf die Patenterteilung:
**08.02.89 Patentblatt 89/6**

(84) Benannte Vertragsstaaten:
**DE FR GB SE**

(56) Entgegenhaltungen:
**DE-A- 2 710 357**
**DE-A- 3 036 563**
**FR-A- 1 564 203**
**FR-A- 2 101 806**

(73) Patentinhaber: **Witzenmann GmbH Metallschlauch-Fabrik Pforzheim, Östliche Karl-Friedrich-Strasse 134, D-7530 Pforzheim (DE)**

(72) Erfinder: **Winzen, Wilfried, Dr., Ing., Grosser Lückenweg 59 a, D-7530 Pforzheim (DE)**

(74) Vertreter: **Lemcke, Rupert, Dipl.-Ing. et al, Patentanwälte Dipl.-Ing. R. Lemcke Dr.-Ing. H.J. Brommer Bismarckstrasse 16 Postfach 4026, D-7500 Karlsruhe 1 (DE)**

**Beschreibung**

Die Erfindung betrifft eine Verbindung für mehrflutige Abgasleitungen von Kraftfahrzeugen, wobei die einzelnen beidseits der Verbindungsstelle mit einem gemeinsamen, mehrflutigen Anschlussstutzen verbundenen, zueinander parallelen Strömungswege an nebeneinander liegenden Stellen durch Zwischenelemente untereinander in Grenzen beweglich weitgehend dicht miteinander verbunden sind.

Derartige Verbindungen sind durch die DE-A 2936377 bekannt, wobei die Zwischenelemente durch Steckhülsen mit O-Ring-Dichtungen gebildet sind. Diese Verbindungen weisen jedoch, durch die Bauart bedingt, Leckagen auf, die unerwünscht oder sogar im Sinne moderner Abgasvorschriften unzulässig sind. Andererseits gestatten die bekannten Verbindungen ohne weitere Steigerung der Leckage nur eine geringe Bewegungsmöglichkeit quer zur Strömungsrichtung.

Bekannt ist es ferner durch die FR-A-2 101 806, zwei Flansche durch einen Metallbalg in Grenzen beweglich und gasdicht miteinander zu verbinden. Diese Verbindungart gilt jedoch nur für Einzelleitungen. Ihre Übertragung auf mehrere zueinander parallele Strömungswege würde zu einer raumgreifenden und kostspieligen Bauweise führen, deren Platzbedarf regelmässig nicht zur Verfügung steht.

Durch die FR-A-2 101 806 ist es ausserdem bekannt, das als Steckhülse ausgebildete Zwischenelement über an den Aussenseiten kugelförmig abgerundeten Ecken in axial und zum Strömungsquerschnitt offenen Ausnehmungen der Anschlussstutzen zu halten. Ferner haben bei dieser Verbindung die Anschlussstützen einen umlaufenden Wulst, an dem die Balkenenden durch sie umfassende Spannmittel gehalten sind.

Aufgabe der Erfindung ist es, bei einer mehrflutigen Verbindung der eingangs genannten Art das Austreten von Leckagemengen in die Atmosphäre durch eine platzsparende Konstruktion mit Sicherheit zu verhindern.

Diese Aufgabe ist erfindungsgemäss dadurch gelöst, dass die in Strömungsrichtung einen gegenseitigen Abstand aufweisenden Anschlussstutzen durch einen gemeinsamen, im Querschnitt der Umschlingungskontur der nebeneinander liegenden Strömungswege entsprechenden Metallbalg elastisch und dicht miteinander verbunden sind.

Im Gegensatz zu den bekannten Lösungen, bei denen für jeden Strömungsweg eine eigene dichte Verbindung notwendig wäre, ist durch die erfindungsgemässe Massnahme für alle nebeneinander liegenden Strömungswege eine gemeinsame elastische Verbindung geschaffen, die nach aussen hin absolut dicht ist und gegenseitige Relativbewegungen der Anschlussstutzen sowohl in Strömungsrichtung als auch quer dazu ermöglicht. Andererseits sind die einzelnen Strömungswege trotzdem weitgehend voneinander getrennt gehalten, wobei eine geringfügige Leckage zwischen den einzelnen Strömungswegen unschädlich ist, da das strömende Medium einheitlich ist und nach aussen hin durch den Metallbalg die absolute Abdichtung gewährleistet ist. Die erfindungsgemässe Lösung ist von der Bauform her gesehen äusserst einfach und platzsparend, so dass dadurch sowohl hinsichtlich der Gestehungskosten als auch hinsichtlich des Bauraumes keine Verteuerung oder Vergrösserung der Abgassammelleitung eintritt.

Nach der Erfindung ergibt sich bei einer zweiflutigen Leitung, also bei einer Leitung mit zwei nebeneinander liegenden Strömungswegen, ein elliptischer bzw. ovaler Balgquerschnitt, liegen drei Strömungswege nebeneinander, so gestaltet sich der Balgquerschnitt im wesentlichen polygonförmig mit dreieckiger Grundstruktur.

Im Rahmen der Erfindung ist es je nach den Gegebenheiten des Einzelfalles ferner möglich, bei im wesentlichen elliptischem bzw. ovalem Balgquerschnitt die Querschnittslängsseiten geradlinig verlaufend oder zum Querschnittsinneren hin eingezogen auszubilden. Hierdurch kann eine Anpassung an räumliche Gegebenheiten erfolgen.

Der Metallbalg kann mit den Anschlussstutzen durch Verschweissen oder dergleichen Fügeverfahren verbunden sein. Es besteht jedoch beispielsweise auch die Möglichkeit, dass die Anschlussstutzen einen aussen umlaufenden Wulst aufweisen und dass die Balgenden auf den zugeordneten Wulst aufgeformt und dort durch sie umfassende Spannmittel gehalten sind, wobei die Spannmittel beispielsweise Spannschellen oder dergleichen sein können.

Was die wenigstens weitgehend voneinander getrennten Führungen der Strömungswege betrifft, so ist es nach der Erfindung zweckmässig, dass die Trennung der Strömungswege durch gegenüber den Anschlussstutzen axial an diesen verschiebbar gelagerte Innenschutzrohre gebildet ist. Bei diesen Innenschutzrohren können deren Enden in axial zum Strömungsquerschnitt offenen Ausnehmungen der Anschlussstutzen gehalten sein. Dadurch sind sie sowohl in Axialrichtung als auch quer dazu axial verschiebbar geführt.

Um den Reibungswiderstand dieser Führung herabzusetzen, ist es zweckmässig, dass die Enden Innenschutzrohre auf ihrer Aussenseite kugelförmig abgerundet sind.

Eine andere Bauform kann dadurch gegeben sein, dass die Trennung durch mit den Anschlussstutzen einstückig verbundene, im gemeinsamen Grenzbereich zwischen den Strömungswegen sich axial erstreckende und einander teilweise überlappende Wandungen gebildet ist. Dabei ist es selbstverständlich, dass die Wandungen sich derart überlappen, dass sie die Beweglichkeit der Verbindungen nicht beeinträchtigen.

Die Erfindung ist nachfolgend anhand einer Ausführungsform näher erläutert, die auf der Zeichnung dargestellt ist. In der Zeichnung zeigen:

Fig. 1 eine Abgassammelleitung in Seitenansicht;

Fig. 2 die Abgassammelleitung gemäss Fig. 1 in Draufsicht;

Fig. 3 eine teilweise Schnittansicht aus der Sammelleitung gemäss Fig. 1 und 2;

Fig. 4 eine teilweise Schnittansicht gemäss der Schnittlinie IV-IV in Fig. 3;

Fig. 5 eine Schnittansicht entsprechend Fig. 4 für eine andere Ausführungsform;

Fig. 6 und 7 zwei abgeänderte Balgquerschnitte.

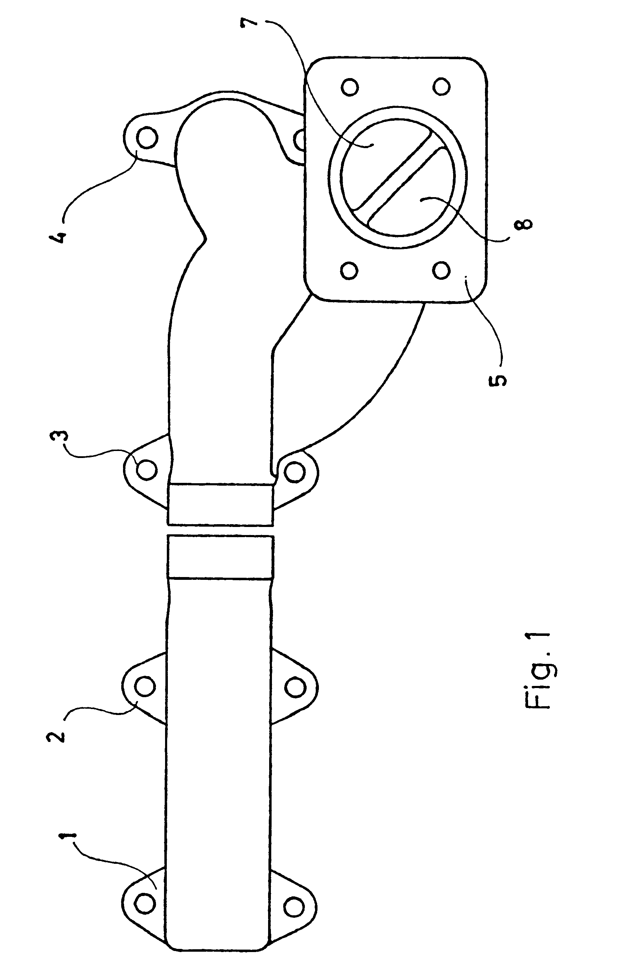

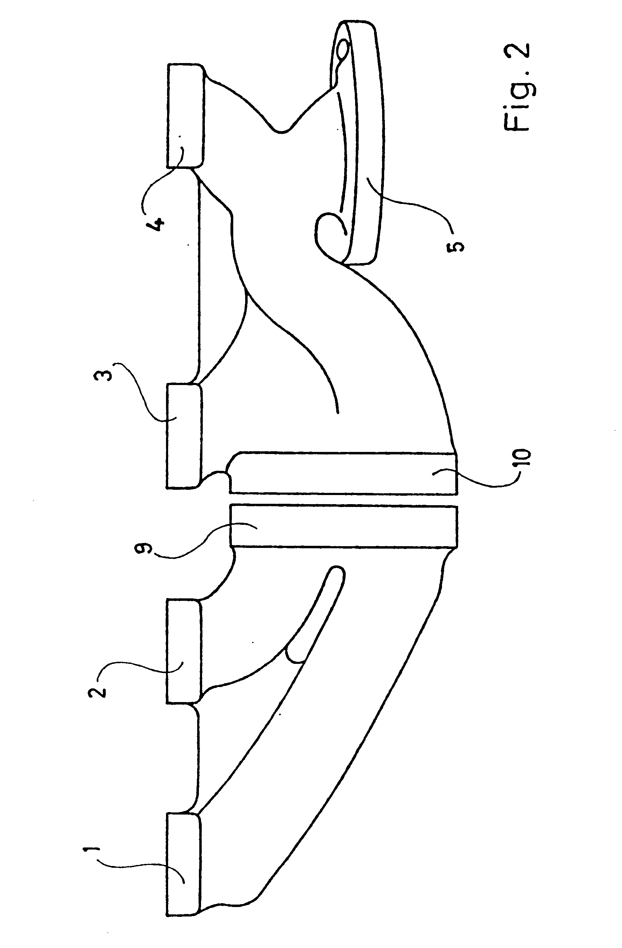

Die Fig. 1 und 2 zeigen eine Abgassammelleitung für einen Vier-Zylinder-Motor, an dessen Motorblock die Abgassammelleitung über Flansche 1, 2, 3 und 4 angeschraubt ist. Ein Flansch 5 dient dem Anschluss der weiterführenden Abgasleitung.

Von den Flanschen 1 und 4 einerseits und 2 und 3 andererseits gehen Strömungswege aus, wobei der von den Flanschen 1 und 4 ausgehende Strömungsweg am Flansch 5 im Querschnitt 7 und der von den Flanschen 2 und 3 ausgehende Strömungsweg am Flansch 5 im Querschnitt 8 enden.

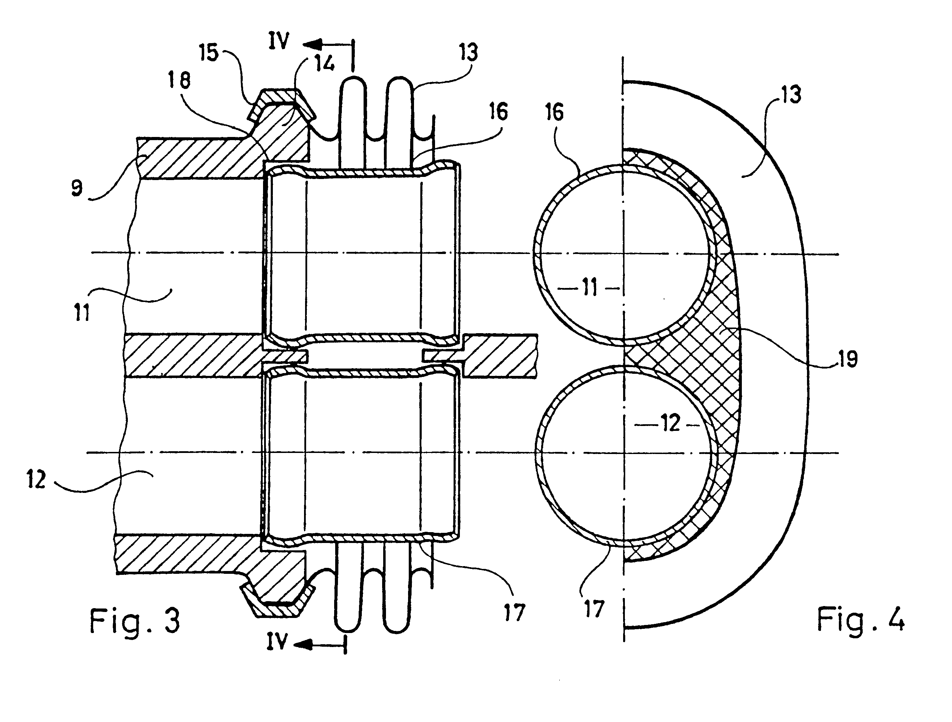

Die so nebeneinander laufenden Strömungswege sind bei der Längsmitte der Abgassammelleitung in Anschlussstutzen 9, 10 zusammengeführt, die in Axialrichtung einen gegenseitigen Abstand haben, um Relativbewegungen zwischen den so gebildeten Hälften der Abgassammelleitung zuzulassen. Um hier die Strömungswege miteinander zu verbinden und nach aussen abzudichten, sind Massnahmen vorgesehen, wie sie im einzelnen anhand der Fig. 3 und 4 näher erläutert werden.

Fig. 3 zeigt einen axialen Schnitt durch den Anschussstutzen 9. Hier ist der Strömungsweg 11 ersichtlich, der vom Anschlussflansch 2 kommt, während der Strömungsweg 12 vom Anschlussflansch 1 abgeleitet ist. Die Strömungswege sind mit dem Anschlussstutzen 9 zu einem Bauteil zusammengefasst, dessen gegenüberliegendes Bauteil in Form des Anschlussstutzens 10 man sich entsprechend ausgebildet vorstellen kann.

Um die Strömungswege nach aussen abzudichten und die Anschlussstutzen 9 und 10 elastisch miteinander zu verbinden, ist ein Metallbalg 13 vorgesehen, der mit seinen Enden auf einen umlaufenden Wulst 14 der Anschlussstutzen aufgeformt und dort durch eine umlaufende Schelle 15 dichtend gehalten ist. Diese Konstruktion ist in den Fig. 1 und 2 nicht im einzelnen dargestellt.

Um die Strömungswege 11 bzw. 12 voneinander getrennt zu halten, werden sie im Bereich der Verbindung der Anschlussstutzen 9 und 10 durch Innenschutzrohre 16, 17 weitergeführt, die mit ihren Enden in Ausnehmungen 18 der Anschlussstutzen 9, 10 derart sitzen, dass ihnen eine Axialverschiebbarkeit in Grenzen möglich ist, während sie in Radialrichtung gehalten sind. Damit die Reibung der Enden der Innenschutzrohre 16, 17 innerhalb der Ausnehmungen 18 so gering wie möglich bleibt, weisen diese Enden eine äussere kugelige Kontur auf.

Fig. 4 ist eine teilweise Darstellung entsprechend der Schnittlinie IV-IV in Fig. 3. Hier sind erneut ersichtlich die Innenschutzrohre 16, 17 sowie der Metallbalg 13. Ausserdem ist die Stirnseite des Anschlussstutzens 9 ersichtlich, die in Fig. 4 mit der Ziffer 19 versehen ist. Damit ist auch ersichtlich, wie im Bereich des Anschlussstutzens 9 die Strömungswege 11, 12 in einem gemeinsamen Bauteil verlaufen. Wie aus Fig. 4 im übrigen ersichtlich ist, hat der Balg 13 einen elliptischen bzw. ovalen Querschnitt.

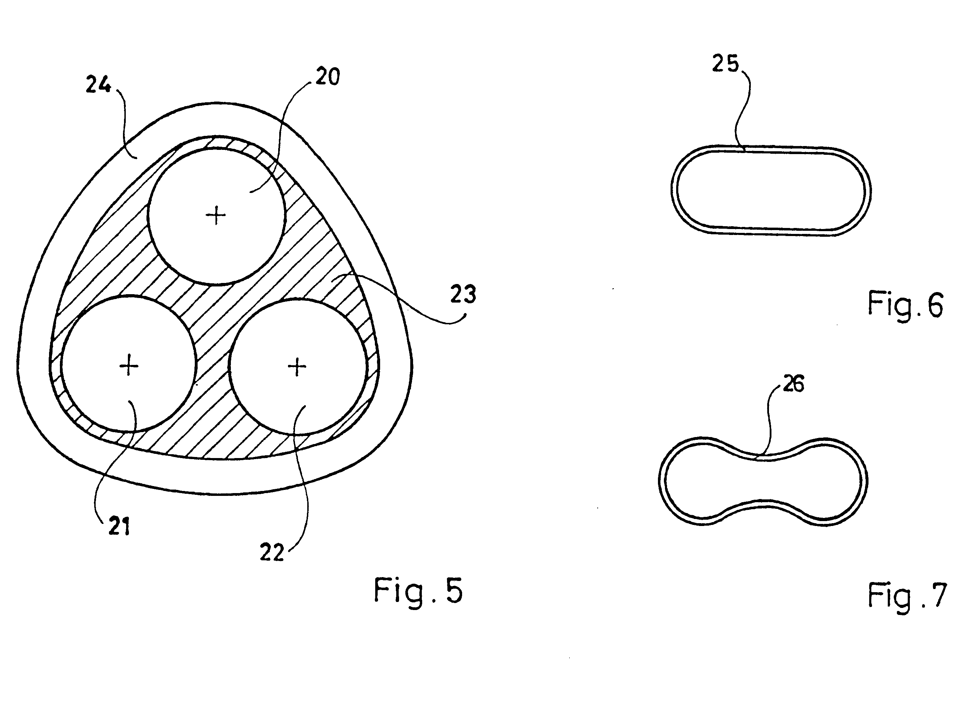

Fig. 5 zeigt ein für einen anderen Zusammenhang denkbares Beispiel in schematischer Querschnittsansicht, bei dem drei im übrigen getrennt voneinander verlaufende Strömungswege 20, 21, 22 an einer Verbindungsstelle in einem Bauteil 23 zusammenliegen, das dem Anschlussstutzen 9 bzw. 10 entspricht. Die elastische Verbindung geschieht hier durch einen im Schnitt dargestellten Balg 24, der in diesem Falle polygonförmig den durch die Strömungswege 20 bis 22 eingenommenen Querschnitt umgibt. Die Festlegung an den entsprechenden Anschlussflanschen kann wieder wie in Fig. 3 dargestellt oder durch gegenseitiges Verschweissen geschehen.

Fig. 6 zeigt ein zu den Fig. 3 und 4 passendes Beispiel eines Balgquerschnittes. Hier ist der Balgquerschnitt nicht oval bzw. elliptisch, sondern es sind die Längsseiten 25 geradlinig ausgebildet.

Schliesslich zeigt Fig. 7 eine ebenfalls beim Gegenstand der Fig. 3 und 4 denkbare Variante eines Balgquerschnittes. Dabei sind die Längsseiten 26 zur Querschnittsmitte des Balges hin zwischen den beiden Strömungswegen für das Medium eingezogen.

Bei den Bauformen mit Bälgen gemäss Fig. 6 und 7 empfiehlt sich die Verbindung mit den Anschlussstutzen durch Schweissen oder dgl. Fügeverfahren. Es ist jedoch auch die Verbindung mit Hilfe von Schellen möglich, wenn an den Längsseiten des Balgquerschnittes passende Stücke zwischen Schelle und Balgwandung eingelegt werden, damit der Verlauf der Schelle von aussen gesehen stets wenigstens geringfügig konvex gekrümmt ausgebildet ist.

Wie insbesondere anhand der Fig. 1 und 2 ersichtlich, erlaubt die dargestellte elastische Verbindung innerhalb einer mehrflutigen Leitung die Unterbringung auf äusserst kleine Räume, wobei sowohl in Axialrichtung als auch quer dazu eine erhebliche Bewegungsfreiheit geschaffen ist, andererseits aber die Strömungswege nach aussen vollkommen abgedichtet sind und innerhalb der Verbindung, abgesehen von einer geringfügigen gegenseitigen Leckage, kontinuierlich weitergeführt sind.

**Patentansprüche**

1. Verbindung für mehrflutige Abgasleitungen von Kraftfahrzeugen, wobei die einzelnen beidseits der Verbindungsstelle mit einem gemeinsamen, mehrflutigen Anschlussstutzen verbundenen, zueinander parallelen Strömungswege an nebeneinander liegenden Stellen durch Zwischenelemente untereinander in Grenzen beweglich weitgehend dicht miteinander verbunden sind, dadurch gekennzeichnet, dass die in Strömungsrichtung einen gegenseitigen Abstand aufweisenden Anschlussstutzen (9, 10, 23) durch einen gemeinsamen, im Querschnitt der Umschlingungskontur der nebeneinander liegenden Strömungswege (11, 12, 20, 21, 22) entsprechenden Metallbalg (13, 24) elastisch und dicht miteinander verbunden sind.

2. Verbindung nach Anspruch 1, dadurch gekennzeichnet, dass bei im wesentlichen elliptischem bzw. ovalem Balgquerschnitt die Querschnittslängsseiten (25, 26) geradlinig verlaufend oder zum Querschnittsinneren hin eingezogen ausgebildet sind.

3. Verbindung nach Anspruch 1 oder 2, dadurch gekennzeichnet, dass der Balg mit den Anschlussstutzen durch Verschweissung od. dgl. Fügeverfahren verbunden ist.

4. Verbindung nach Anspruch 1 oder 2, dadurch gekennzeichnet, dass die Anschlussstutzen (9, 10) einen aussen umlaufenden Wulst (14) aufweisen und dass die Balgenden auf den zugeordneten Wulst aufgeformt und dort durch sie umfassende Spannmittel (15) gehalten sind.

5. Verbindung nach einem der vorhergehenden Ansprüche, dadurch gekennzeichnet, dass die Trennung der Strömungswege (11, 12, 20, 21, 22) durch gegenüber den Anschlussstutzen axial an diesen verschiebbar gelagerte Innenschutzrohre (16, 17) gebildet ist.

6. Verbindung nach Anspruch 5, dadurch gekennzeichnet, dass die Enden der Innenschutzrohre (16, 17) in axial und zum Strömungsquerschnitt offenen Ausnehmungen (18) der Anschlussstutzen (9, 10) gehalten sind.

7. Verbindung nach Anspruch 5 oder 6, dadurch gekennzeichnet, dass die Enden der Innenschutzrohre (16, 17) auf ihrer Aussenseite kugelförmig abgerundet sind.

8. Verbindung nach einem der Ansprüche 1 bis 4, dadurch gekennzeichnet, dass die Trennung durch mit den Anschlussstutzen einstückig verbundene, im gemeinsamen Grenzbereich zwischen den Strömungswegen sich axial erstreckende und einander teilweise überlappende Wandungen gebildet ist.

## Claims

1. Connection for multi-flow exhaust ducts of motor vehicles, where the individual, mutually parallel flow paths, connected on both sides of the connection point with a common multi-flow connector piece, are limitedly mutually movably and largely tightly connected with one another at positions lying side by side, characterised in that the connector pieces (9, 10, 23), which have a mutual spacing in the direction of flow, are elastically and tightly connected with one another by a common metal bellows (13, 24) corresponding in cross-section to the enveloping contour of the flow paths (11, 12, 20, 21, 22) lying side by side.

2. Connection according to claim 1, characterised in that in the case of a substantially elliptical or oval cross-section of the bellows the long sides (25, 26) of the cross-section are formed with a rectilinear course or are retracted towards the interior of the cross-section.

3. Connection according to claim 1 or 2, characterised in that the bellows is connected with the connector pieces by welding or the like joining methods.

4. Connection according to claim 1 or 2, characterised in that the connector pieces (9, 10) have an externally surrounding bead (14) and in that the bellows ends are shaped on to the associated bead and held there by clamping means encircling them.

5. Connection according to one of the preceding claims, characterised in that the separation of the flow paths (11, 12, 20, 21, 22) is formed by internal protective tubes (16, 17) mounted relatively axially displaceably on the connector pieces.

6. Connection according to claim 5, characterised in that the ends of the internal protective tubes (16, 17) are held in recesses (18) of the connector pieces (9, 10) which are open axially and towards the flow cross-section.

7. Connection according to claim 5 or 6, characterised in that the ends of the internal protective tubes (16, 17) are spherically rounded off on their outside.

8. Connection according to one of claims 1 to 4, characterised in that the separation is formed by walls integrally connected with the connector pieces, extending axially in the common limit region between the flow paths and partially overlapping one another.

## Revendications

1. Dispositif de raccordement pour des conduites de gaz d'échappement à plusieurs voies d'écoulement parallèles pour des véhicules automobiles, du type dans lequel les différentes voies d'écoulement, qui sont parallèles entre elles et qui sont reliées de part et d'autre du point de raccordement, à un embout de raccordement commun à plusieurs voies d'écoulement, sont reliées avec une étanchéité prononcée entre elles, en des emplacements voisins par des éléments intermédiaires autorisant une mobilité limitée, caractérisé par le fait que les embouts de raccordement (9, 10, 23) qui présentent entre eux une distance mutuelle dans la direction de l'écoulement, sont reliés entre eux, élastiquement et avec étanchéité, par un soufflet métallique commun (13, 14) dont la section transversale correspond au contour enveloppant des voies d'écoulement voisins (11, 12, 20, 21, 23).

2. Dispositif de raccordement suivant la revendication 1, caractérisé en ce que pour une section transversale du soufflet sensiblement elliptique ou ovale, les côtés longitudinaux (25, 26) de la section transversale sont rectilignes ou sont rétractés vers l'intérieur par rapport à la section transversale.

3. Dispositif de raccordement suivant la revendication 1 ou 2, caractérisé en ce que le soufflet est relié aux embouts de raccordement par soudage ou par un procédé de jointoiement analogue.

4. Dispositif de raccordement suivant la revendication 1 ou 2, caractérisé en ce que les embouts de raccordement (9, 10) comportent un bourrelet périphérique extérieur (14) et en ce que les extrémités du soufflet sont formées sur le bourrelet associé et y sont maintenues par des moyens de serrage (15) qui les entourent.

5. Dispositif de raccordement suivant l'une des revendications précédentes, caractérisé en ce que la séparation des voies d'écoulement (11, 12, 20, 21, 22) est formée par des tubes intérieurs de protection (16, 17) montés sur l'embout de raccordement avec possibilité de déplacement axial sur celui-ci.

6. Dispositif de raccordement suivant la revendication 5, caractérisé en ce que les extrémités des tubes intérieurs de protection (16, 17) sont maintenues dans des cavités axiales (18) des embouts de raccordement (9, 10), qui sont ouvertes dans le sens de la section transversale d'écoulement.

7. Dispositif de raccordement suivant la revendication 5 ou 6, caractérisé en ce que les extrémités des tubes intérieurs de protection (16, 17) sont arrondies sphériquement sur leur côté extérieur.

8. Dispositif de raccordement suivant l'une des revendications 1 à 4, caractérisé en ce que la séparation des voies d'écoulement est formée par des parois d'une pièce avec les embouts de raccordement, s'étendant axialement dans la partie commune de démarcation entre les voies d'écoulement et se recouvrant partiellement.

Fig.1

Fig. 2

Fig. 3

Fig. 4

Fig. 5

Fig. 6

Fig. 7

EP 0172401 B1